# EUROPEAN PATENT APPLICATION

(11) **EP 2 461 640 A1**
(43) Date of publication of application: **06.06.2012**
(21) Application number: 09700529.2
(22) Date of filing: 12.01.2009
(51) Int. Cl.: H04W 88/02

(54) **METHOD AND INTEGRATED CIRCUIT CARD FOR MANAGING THE DATABASE BY INTERACTING WITH THE MOBILE EQUIPMENT**

(30) Priority: 28.12.2007 CN 200710304689
(71) Applicant: Beijing Watch Data System Co., Ltd., Beijing 100015 (CN)
(72) Inventor: LEI, Jiye, Beijing 100015 (CN)
(74) Representative: Meissner, Bolte & Partner
(86) International application number: PCT/CN2009/000041
(87) International publication number: WO 2009/086791

(57) **Abstract**

A method for managing the database by interacting with the mobile equipment includes the following steps: interacting with the mobile equipment through an STK active command to obtain the data operation information of the user; determining a corresponding extended STK database command according to the data operation information; calling the corresponding database application programming interface (API) function to execute the data operation in the database according to the extended STK database command. An integrated circuit card corresponding to the method for managing the database by interacting with the mobile equipment is also provided.

## Description

### BACKGROUND OF THE INVENTION

### 1. Technical Field

The present invention relates to a subscriber identity module (SIM) in the mobile communication field, and more particularly, to a method for a mobile equipment to operate a database of an integrated circuit (IC) card through an SIM application toolkit (STK).

### 2. Description of Related Art

As a kind of devices for secure storage and secure operation, Integrated Circuit (IC) cards are widely used in a lot of fields including identity authentication and transaction payment. With development of the IC technologies and the market demands, the IC cards are made to have increasingly higher performance. Generally, a high-performance IC card has a high-performance Central Processing Unit (CPU), a mass storage and a high-speed communication interface.

The conventional chip operating systems (COSs) are unable to give full play to the advantages of such high-performance IC cards. Therefore, on basis of the high-performance IC cards, a multi-tasking real-time operation system has been implemented. The multi-tasking real-time operating system includes two core modules, i.e., task management and a file system, and a plurality of tasks, with the conventional COS being one of the tasks in the high-performance IC card operating system. The task management includes task creation and deletion, task dispatching and task communication. The file system supports the file format of FAT12 or FAT16 or FAT 32 depending on size of the storage, and also has a file operation interface packaged therein, which is named as the virtual file system application programming interface (VFS API).

As described above, a high-performance card has a mass storage, which can support storage and operation of mass data, and on the other hand, simple file operations now have failed to satisfy the requirements of mass data applications in terms of both speed and convenience. Currently, some high-performance IC cards have incorporated a database management function therein and are provided with a database management system application programming interface (DBMS API), which can greatly improve the performance in mass data operation. This kind of IC cards that support a database is called the database IC card.

In the prior art, no database IC card has been applied to mobile equipment (mobile phones); that is to say, the existing technologies fail to support operation and management on a database of an IC card by a mobile equipment. Consequently, mobile equipment users are greatly restricted in the ability to maintain and search for mass data.

Embodiments of the present invention provide a method and an IC card for managing a database by interacting with mobile equipment. This method and the IC card can manage the database of the IC card by interacting with the mobile equipment to support the ability of the mobile equipment user to maintain and search for mass data.

A method for an IC card to manage a database by interacting with mobile equipment, comprising the following steps of:
interacting with the mobile equipment through an STK active command to obtain data operation information of a mobile equipment user;
determining a corresponding extended STK database command according to the data operation information; and
calling a corresponding database application programming interface (API) function to execute the data operation in the database according to a database API function indicator carried in the extended STK database command.

An IC card for mobile equipment, comprising:
a storage module, being configured to store a database;
a database management module, being configured to manage the database stored in the storage module according to a database API function;
and further comprising:
   an interaction module, being configured to interact with the mobile equipment through an STK active command;
   an STK database command determination module, being configured to obtain data operation information of a user of the mobile equipment via the interaction module and to determine a corresponding extended STK database command;
   an STK database command execution module, being configured to call a corresponding database API function to execute the data operation in the database according to the STK database command determined by the STK database command determination module and the database API function indicator carried by the extended STK database command.

According to embodiments of the present invention, because the IC card executes an extended STK database command after obtaining the data operation information of the mobile equipment user and calls the database API function while executing the extended STK database command, the function of operating and managing the database of the IC card through the STK is realized, thereby accomplishing the function of allowing the user of the mobile equipment to maintain and search for mass data quickly.
Fig. 1 is a flowchart illustrating how mobile equipment processes an active interaction command of an SIM card by using the STK technology in the prior art;
Fig. 2 is a flowchart of a method for an IC card to manage a database by interacting with mobile equipment according to a first embodiment of the present invention; and
Fig. 3 is a block diagram of an IC card for managing a database by interacting with mobile equipment according the first embodiment of the present invention.

According to embodiments of the present invention, the IC card interacts with the mobile equipment through an STK active command to obtain data operation information (e.g., data operation information related to saving and deletion of data) of the mobile equipment user, calls an extended STK database command according to the data operation information thus obtained, and calls a database API function according to the STK database command. Thus, management and operation on the database can be realized. Hereinbelow, a brief introduction will be made on the STK technology.

In the mobile communication industry, all basic services and value-added services provided by mobile communication operators adopt a subscriber identity module (an IC card) as a carrier. Common subscriber identity modules include SIM cards used in Global System for Mobile Communication (GSM) networks. Currently, both GSM terminals (GSM mobile phones) and SIM cards support the STK function.

Base on the STK technology, the operators can provide the users with various menu applications, for example, mobile QQ, group short messages (SMSs), Monternet ( Mobile+Internet and so on. By choosing an application menu item, inputting of a key word the user can accomplish operations of such services as personal SMS management and browsing of designated information.

STK is a kind of small programming language, i.e., a kind of tools software for developing value-added services based on an SIM card operating system, and may be understood as an SIM card active and interactive operating system derived from the original SIM card passive operating system. The mechanism provided by STK allows for interaction between an application in the SIM card and mobile equipment(ME) supporting the application, i.e., supports active sessions between the SIM card and the mobile equipment. The SIM card supporting the STK technology conforms to a series of specifications including GSM11.11, GSM11.14 and GSM03.08; in this way, the SIM card allows the STK applications in the card to realize more services.

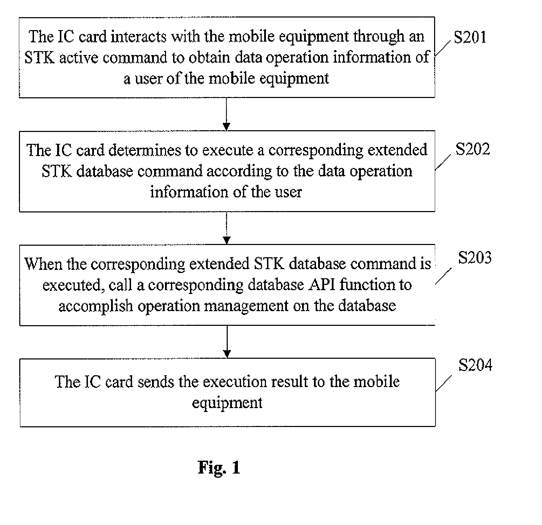

Fig. 1 shows a process in which the mobile equipment processes an active interaction command of the SIM card by using the STK technology.

Step S101: the mobile equipment sends a command to the SIM card.

Step S102: the SIM card responds to the mobile equipment and sends a status word SW=0x91XX to the mobile equipment.

The status word SW=0x91XX ("XX" represents the number of bytes in the active command) represents that the active command has been prepared well.

Step S103: after receiving the status word SW=0x91XX sent by the SIM card, the mobile equipment learns that an active command is to be sent by the SIM card, so it sends a Fetch command to inform the SIM card that the SIM card can then send the active command.

Step S104: after receiving the Fetch command, the SIM card send the active command to the mobile equipment and also sends the status word.

Step S105: the mobile equipment processes the active command that it receives.

According to the specification to which STK conforms, the mobile equipment can identify the active command sent by the SIM card and know how to process the active command.

Step S106: after processing of the active command is completed, the mobile equipment sends the processing result to the SIM card through a Terminal Response command.

Step S107: after receiving the processing result, the SIM card sends a response status word to the mobile equipment.

If the response status word is SW=0x9000, then it represents that the interaction process of the active command is completed. Otherwise, if the response status word is SW=0x91XX, then the SIM card notifies the mobile equipment to continue to obtain a next active command.

Active commands defined in the GSM 11.14 specification are listed in Table 1. These active commands may include a command for instructing the mobile equipment to display a text (Display Text), a command for getting a user input from the mobile equipment (Get Input), a command for getting a key input by the user from the mobile equipment (Get Inkey), a command to install Level 0 and Level 1 menus (Setup Menu), a command to install application submenus (Select Item) and so on. According to the basic commands provided by the specification, the SIM card can actively notify the mobile equipment to accomplish the functions of displaying a text, getting a user input, selecting a menu option or the like, thereby realizing more functions in a more flexible way.

**Table 1**

| No. | GSM11.14 active commands |
|---|---|
| 1 | Display Text |
| 2 | Get Inkey |
| 3 | Get Input |
| 4 | More Time |
| 5 | Play Tone |
| 6 | Poll Interval |
| 7 | Refresh |
| 8 | Setup Menu |
| 9 | Select Item |
| 10 | Send Short Message |
| 11 | Send SS |
| 12 | Send USSD |
| ... ... | ... ... |

What listed in Table 1 are STK active commands, through which the SIM card can interact with the mobile equipment.

In addition to the STK active commands, some basic STK commands and extended STK commands are also defined in the OTA (Over The Air) specification. These basic STK commands and extended STK commands are not used for interaction of the SIM card with the mobile equipment, but correspond to commonly used API functions of some SIM cards respectively to facilitate programming of some common STK applications by developers.

However, no command for executing database operations is included in the existing extended STK commands (as shown in Table 2), so it is impossible for the developers to program STK applications for database operations. To solve this problem, a set of extended STK commands for database operations (as shown in Table 3) is provided in this embodiment of the present invention. These extended STK database commands are also not used for interaction of the SIM card with the mobile equipment, but correspond to API functions for database operations respectively. Thus, the developers can now use these extended STK database commands to program STK applications for database operations and management.

**Table 2**

| Index No. of API functions | Extended STK commands |
|---|---|
| 0x01 | Page Disp ADN |
| 0x02 | ADN To ASCII |
| 0x03 | ASCII To ADN |
| ... ... | ... ... |
| 0x1F | Send |
| 0x20 | Read Binary |
| 0x21 | Read Record |
| 0x22 | Select |
| 0x23 | Update Binary |
| 0x24 | Update Record |
| 0x25 | Extract SMS Data |
| 0x26 | Verify CHV or PUK |
| ... ... | ... ... |

**Table 3**

| Index No. of API functions | Extended STK database commands |
|---|---|
| 0x37 | Open Database (for opening the database) |
| 0x38 | Close Database (for closing the database) |
| 0x39 | Add Record (for adding records to the database) |
| 0x3A | Get Record (for searching for a record) |
| 0x3B | Get Next Record (for searching for the next record) |
| 0x3C | Get Record Close (for terminating the inquiry) |
| 0x3D | Modify Record (for modifying a record) |
| 0x3E | Delete Record (for deleting a record) |

Of course, Table 3 only shows one of the specific ways to extend the STK database commands, and those skilled in the art may also extend the STK database commands in other ways.

The extended STK database commands shown in Table 3 correspond to different database API functions, and conform to the format of extended commands defined in the OTA specification, i.e., the TLV (Tag Length Value) format. Extended commands of the TLV format include three sections, i.e., an API_Tag, an API_Length and an API_Value.

For an extended STK database command, the API_Tag has a hexadecimal value of "FF";
the API_Length represents the number of bytes of the API-value;
the API_Value consists of an API index number (API_Index) and a plurality of parameters (Parameter).

In principle, the API_Index may be assigned any value as long as it is not identical to the index numbers API_Index of the extended APISTK commands that is already used in the OTA specification. In the present invention, a preferred scheme is adopted in which values of API_Index of the extended STK database commands increase in sequence from the last extended API index number (i.e., a hexadecimal number "36") already defined in the OTA specification; i.e., the index numbers of DB STK API start from the hexadecimal number "37" and increase in sequence. Different API_Index values correspond to API functions of different functionalities, so during execution of an STK database command, a corresponding database API function can be called according to the API_Index value of the STK database command.

There may be either no or a plurality of parameters, each of which may be a constant or a variable.

According to the TLV format, parameters may be carried by an extended STK command. Therefore, different STK database commands correspond to different database API functions and the parameters carried in the STK database commands are just parameters of the corresponding database API functions. Thus, the STK application developers can program specific STK applications that support the database according to the extended STK database commands.

For example, a developer may wish to provide mobile equipment users with an STK application for searching for restaurants at a certain place. Because there may be a lot of restaurants, the searching efficiency would be very low if the conventional record searching method is still used. However, if an IC card that supports a database is used and a restaurant searching STK application that supports a database is programmed by the developer using the aforesaid STK database commands, then the searching efficiency will be greatly improved when the restaurant searching function that supports a database is used by the mobile equipment users.

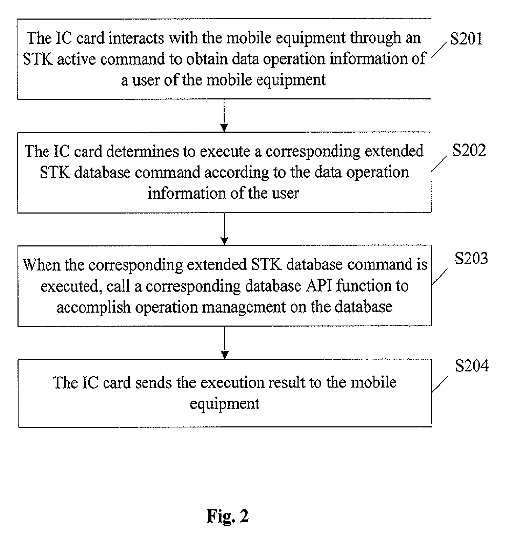

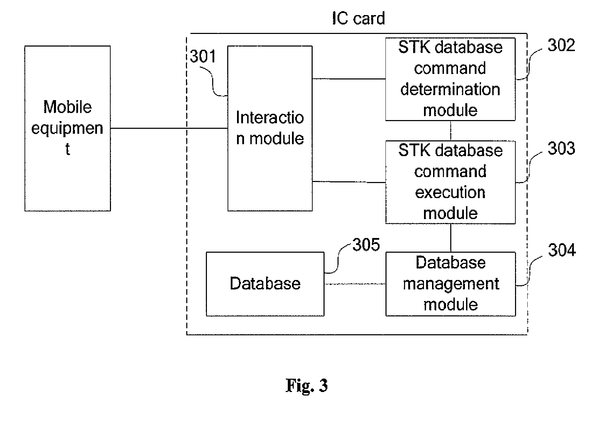

An embodiment of the present invention provides a method for an IC card to manage a database by interacting with mobile equipment. As shown in Fig. 2, this method comprises the following steps:
Step S201: the IC card interacts with the mobile equipment through an STK active command to obtain data operation information of a user of the mobile equipment.
   The IC card interacts with the mobile equipment through an STK active command to obtain data operation information of a user of the mobile equipment. Specifically, through an STK active command, the IC card sends a menu for selection by the user to the mobile equipment. After a menu item is selected by the user, the mobile equipment sends the selected menu item to the IC card or sends information inputted by the user to the IC card so that the IC card can obtain the data operation information (e.g., operations of saving certain data, deleting or modifying data) of the mobile equipment user. This is well known to those skilled in the art, so no description will be further made herein.
Step S202: the IC card determines to execute a corresponding extended STK database command according to the data operation information of the user.
   After obtaining the data operation information of the user, the IC card learns whether the user wants to save, delete or search for certain data. In the prior art, there is no extended STK database command but some simple STK commands for reading and writing files, so STK application developers can only call these simple STK commands for reading and writing files to execute data operations. However, as extended STK database commands are provided in embodiments of the present invention, the STK application developers now can call corresponding STK database commands. For example, if the data operation information is that the user is to add a name record of "Somebody", then the STK database command Add Record can be called to write the data "Somebody" into the name database. Of course, as the STK database command per se can carry parameters, "Somebody" may be carried by the command Add Record as a parameter.
Step S203: when the corresponding extended STK database command is executed, call a corresponding database API function to accomplish operation management on the database.
   When the corresponding extended STK database command is executed, the corresponding database API function is called according to the API_Index value carried by the extended STK database command; and associated parameters are loaded into the corresponding database API function according to the parameter section of the API_Value carried by the extended STK database command, thereby accomplishing the operation on the database. In other words, operations such as inserting, deleting, modifying and searching for data can be performed on the database.
Step S204: the IC card sends the execution result to the mobile equipment.
   When the extended STK database command is executed, the corresponding database API function is called to accomplish operation management on the database. Once the corresponding operation management of the database is completed by the corresponding database API function, an execution result (i.e., the saving operation succeeds, the searching operation fails or the like) will be returned. Then, the IC card returns the execution result to the mobile equipment.
   An embodiment of the present invention provides an IC card for managing a database by interacting with mobile equipment. As shown in Fig. 3, the IC card comprises an interaction module 301, an STK database command determination module 302, an STK database command execution module 303, a database API module 304, and a database 305 stored in a storage module.

The STK database command determination module 302 is configured to obtain data operation information of the mobile equipment user from the interaction module 301, and determine an extended STK database command to be executed according to the data operation information of the user.

The STK database command execution module 303 is configured to execute the extended STK database command that is determined by the STK database command determination module 302, and, according to the extended STK database command, call the corresponding database API function from the database API module 304 to accomplish the operation and management on the database 305. The STK database command execution module 303 is also configured to, after the database API function has accomplished the operation and management on the database 305, obtain an execution result returned by the database API function and send the execution result to the mobile equipment via the interaction module 301.

According to embodiments of the present invention, because the IC card executes an extended STK database command after obtaining the data operation information of the mobile equipment user and calls the database API function while executing the extended STK database command, the function of operating and managing the database of the IC card through the STK is realized, thereby accomplishing the function of allowing the user of the mobile equipment to maintain and search for mass data quickly.

As will be appreciated by those of ordinary skill in the art, all or some of the steps described in the above embodiment of the method may be accomplished by associated hardware controlled by a program. The program may be stored in a computer readable storage medium such as an ROM/RAM, a magnetic disk or a compact disk.

What described above are only preferred embodiments of the present invention. It shall be appreciated that, improvements or modifications may be made by those of ordinary skill in the art without departing from the principles of the present invention, and any of such improvements and modification shall still fall within the scope of the present invention.

## Claims

1. A method for an IC card to manage a database by interacting with mobile equipment, comprising the following steps of:
interacting with the mobile equipment through an STK active command to obtain data operation information of a mobile equipment user;
determining a corresponding extended STK database command according to the data operation information; and
calling a corresponding database API function to execute the data operation in the database according to a database API function indicator carried in the extended STK database command.

2. The method of Claim 1, wherein the extended STK database command is of a format determined by the OTA specification.

3. The method of Claim 1 or Claim 2, wherein the extended STK database command comprises:
an STK database command for inserting a record corresponding to a data insertion operation;
an STK database command for deleting a record corresponding to a data deletion operation;
an STK database command for searching for a record corresponding to a data searching operation;
an STK database command for modifying a record corresponding to a data modification operation;
an STK database command for opening the database corresponding to a selection application; and
an STK database command for closing the database corresponding to an exit application.

4. The method of Claim 2, wherein an API_Tag of the extended STK database command has a value of a hexadecimal number "FF".

5. The method of Claim 2 or Claim 4, wherein an API_Index of the extended STK database command has a value different from API_Index values of existing extended STK commands in the OTA specification.

6. The method of Claim 5, wherein the database API function indicator carried in the extended STK database command is the API_Index value of the extended STK database command.

7. The method of Claim 2, wherein an API_Value parameter section of the extended STK database command may comprise either no parameter or at least one parameter.

8. The method of Claim 7, wherein the step of calling the corresponding database API function according to the database API function indicator carried in the extended STK database command comprises:
calling the corresponding database API function according to the database API function indicator carried in the extended STK database command, and loading a parameter of the extended STK database command into the corresponding database API function.

9. The method of Claim 1, further comprising:
after the corresponding database API function has been called to execute the data operation, obtaining an execution result returned by the database API function and feeding the execution result back to the mobile equipment through the STK active command.

10. An IC card for mobile equipment, comprising:
a storage module, being configured to store a database;
a database management module, being configured to manage the database stored in the storage module according to a database API function;
and further comprising:
an interaction module, being configured to interact with the mobile equipment through an STK active command;
an STK database command determination module, being configured to obtain data operation information of a mobile equipment user via the interaction module and to determine a corresponding extended STK database command;
an STK database command execution module, being configured to call a corresponding database API function to execute the data operation in the database according to the STK database command determined by the STK database command determination module and the database API function indicator carried in the extended STK database command.

11. The IC card of Claim 10, wherein the extended STK database command determined by the STK database command determination module is of a format determined by the OTA specification; and
the database API function indicator carried in the extended STK database command is the API_Index value of the extended STK database command, and an API_Index of the extended STK database command has a value different from API_Index values of existing extended STK commands in the OTA specification;
an API_Tag of the extended STK database command has a value of a hexadecimal number "FF".

12. The IC card of Claim 10, wherein the STK database commond execution module is further configured to, after the corresponding database API function has been called to execute the data operation in the database, obtain an execution result returned by the database API function and feed the execution result back to the mobile equipment through the STK active command.

13. The IC card of Claim 10, wherein the STK database command determined by the STK database command determination module includes:
an STK database command for inserting a record corresponding to a data insertion operation;
an STK database command for deleting a record corresponding to a data deletion operation;
an STK database command for searching for a record corresponding to a data searching operation;
an STK database command for modifying a record corresponding to a data modification operation;
an STK database command for opening the database corresponding to a selection application; and
an STK database command for closing the database corresponding to an exit application.
